# EUROPÄISCHE PATENTSCHRIFT

(11) **EP 2 250 397 B1**
(45) Veröffentlichungstag und Bekanntmachung des Hinweises auf die Patenterteilung: **05.08.2015**
(21) Anmeldenummer: 09720790.6
(22) Anmeldetag: 20.02.2009
(51) Int. Cl.: F16H 3/12, F16H 61/688, F16H 61/04, F16D 49/08, F16D 65/14, F16D 121/24, F16D 125/52, F16D 125/64

(54) **BETÄTIGUNGSANORDNUNG EINES ZENTRALSYNCHRONISIERTEN DOPPELKUPPLUNGSGETRIEBES**
ACTUATING ASSEMBLY FOR A CENTRALLY SYNCHRONISED DUAL-CLUTCH TRANSMISSION
SYSTÈME D'ACTIONNEMENT D'UNE BOÎTE DE VITESSES À DOUBLE EMBRAYAGE ET À SYNCHRONISATION CENTRALE

(30) Priorität: 13.03.2008 DE 102008000637
(43) Veröffentlichungstag der Anmeldung: 17.11.2010
(73) Patentinhaber: ZF Friedrichshafen AG, 88038 Friedrichshafen (DE)
(72) Erfinder: DREIBHOLZ, Ralf, 88074 Meckenbeuren (DE); LUEBKE, Eckhardt, 88048 Friedrichshafen (DE); REISCH, Matthias, 88214 Ravensburg (DE); WAFZIG, Jürgen, 88097 Eriskirch (DE)
(86) Internationale Anmeldenummer: PCT/EP2009/052014
(87) Internationale Veröffentlichungsnummer: WO 2009/112344

(56) Entgegenhaltungen:
- EP-A- 1 400 731
- DE-A1- 19 950 679

## Beschreibung

Die vorliegende Erfindung betrifft eine Betätigungsanordnung zum Betätigen von Synchronisationsmitteln eines zentralsynchronisierten Doppelkupplungsgetriebes gemäß der im Oberbegriff des Patentanspruches 1 näher definierten Art.

Das Dokument EP 1 400 731 zeigt den nächstliegenden Stand der Technik mit allen Merkmalen des Oberbegriffs des Anspruchs 1.

Beispielsweise aus der Druckschrift DE 10 2006 015 898 A1 ist eine Kupplungseinrichtung mit einer Kupplung und einer Getriebebremse für eine Verbrennungskraftmaschine mit einem Getriebe bekannt. Die zur Betätigung der Kupplung vorgesehene Kupplungseinrichtung weist zudem ein Übertragungselement auf, mittels dessen die Bewegung der Kupplung mechanisch auf die Getriebebremse übertragbar ist, so dass ein individuelles Ansteuern der Getriebebremse möglich ist. Ferner ist aus der Druckschrift DE 10 2004 002 045 A1 ein Anfahrkupplungssystem für ein Fahrzeug bekannt, welches eine Anfahrkupplung und eine Getriebebremse umfasst. Die Anfahrkupplung und die Getriebebremse werden über einen Aktuator betätigt. Aus den vorgenannten Druckschriften ist somit bekannt, dass der zur Betätigung der Kupplung vorgesehene Aktuator auch zur Betätigung einer Getriebebremse vorgesehen ist.

Bei den vorgeschriebenen zentralsynchronisierten Getrieben mit nur einer Getriebeeingangswelle ist demzufolge auch nur ein Synchronisationsmittel an der Getriebeeingangswelle vorgesehen. Im Gegensatz dazu sind bei zentralsynchronisierten Doppelkupplungsgetrieben jedem Teilgetriebe und damit jeder Getriebeeingangswelle ein Synchronisationsmittel zugeordnet. Somit sind zumindest zwei Aktuatoren erforderlich, die jeweils ein Synchronisationsmittel betätigen. Als Synchronisationsmittel sind verschiedene Ausführungen, wie z.B. klassische Synchronisierungen beziehungsweise Getriebebremsen zum Differenzdrehzahlausgleich bekannt. Es ist auch möglich, dass an jeder Schaltstelle ein Synchronisationsmittel in Zahl der zu schaltenden Losräder angeordnet ist. Bei dieser Ausführungsvariante sind weitere Aktuatoren erforderlich, um die Synchronisationsmittel an jeder Schaltstelle zu betätigen.

Der vorliegenden Erfindung liegt die Aufgabe zu Grunde, eine Betätigungsanordnung eines zentralsynchronisierten Doppelkupplungsgetriebes der eingangs beschriebenen Gattung vorzuschlagen, bei dem eine besonders kosten- und bauraumgünstige Aktuatorik vorgesehen ist.

Diese Aufgabe wird erfindungsgemäß durch die Merkmale des Patentanspruches 1 gelöst. Weitere vorteilhafte Ausgestaltungen ergeben sich aus den Unteransprüchen und den Zeichnungen.

Demnach wird eine Betätigungsanordnung zum Betätigen von Synchronisationsmitteln eines zentralsynchronisierten Doppelkupplungsgetriebes mit zumindest einem ersten Teilgetriebe und einen zweiten Teilgetriebe vorgeschlagen, wobei jedem Teilgetriebe zumindest ein Synchronisationsmittel zugeordnet ist. Erfindungsgemäß ist vorgesehen, dass zumindest die Synchronisationsmittel der beiden Teilgetriebe über einen gemeinsamen Aktuator betätigbar sind. Dadurch, dass nur ein Aktuator für beide Synchronisationsmittel erforderlich ist, ergibt sich neben der Kostenersparnis auch ein Bauraumvorteil. Zudem kann auch bei dem elektrischen Steuergerät zum Ansteuern des Aktuators hinsichtlich des erforderlichen Bauraumes und der Herstellungskosten eine Einsparung erfolgen. Es ist auch möglich, dass mit dem Aktuator weitere vorgesehene Synchronisationsmittel des Getriebes betätigt werden.

Im Rahmen einer vorteilhaften Weiterbildung der Erfindung kann vorgesehen sein, dass in Abhängigkeit der jeweiligen Bewegungsrichtung des Aktuators aus seiner Nulllage heraus das Synchronisationsmittel des ersten Teilgetriebes oder das Synchronisationsmittel des zweiten Teilgetriebes ansteuerbar ist. Dadurch ergibt sich der Vorteil einer höheren Funktionssicherheit bei dem Doppelkupplungsgetriebe, da in keinem Fall beide Synchronisationsmittel gleichzeitig angesteuert werden können. Auf diese Weise können die Synchronisationsmittel nie gegeneinander wirken. Es sind jedoch auch andere Ansteuerungsmöglichkeiten der Synchronisationsmittel der beiden Teilgetriebe denkbar.

Gemäß einer möglichen Ausgestaltung der Erfindung kann vorgesehen sein, dass zur Übertragung der Bewegungsrichtung des Aktuators auf die Synchronisationsmittel zumindest ein Übertragungsmittel oder dergleichen zwischen dem Aktuator und den jeweiligen Synchronisationsmittel vorgesehen ist. Beispielsweise kann der so genannte Kombiaktuator der erfindungsgemäßen Betätigungsanordnung mit einem Übertragungsmittel auf die beiden Synchronisationsmittel wirken. Es ist auch möglich, dass zwei Übertragungsmittel an dem Aktuator vorgesehen sind, die jeweils auf ein Synchronisationsmittel wirken. Als Übertragungsmittel können mechanische, hydraulische, pneumatische oder dergleichen Mittel eingesetzt werden.

Beispielsweise kann eine Ausführungsvariante der erfindungsgemäßen Betätigungsanordnung mit nur einem Übertragungsmittel, welches als ein Bauteil ausgeführt sein kann, vorsehen, dass das Übertragungsmittel zumindest einen Exzenter enthält. In einer bevorzugten Ausführungsvariante werden zwei Exzenter auf einer Welle angeordnet und somit zu einer Doppelexzenterwelle zusammengefasst. Die Enden der Exzenter sind jeweils mit einem bewegbaren Ende des z.B. als Bandbremse ausgebildeten Synchronisationsmittel verbunden. Auf diese Weise kann die Exzenterwelle beide Synchronisationsmittel durch den Aktuator betätigen. Die konstruktive Ausführung der Doppelexzenterwelle kann derart gestaltet sein, dass die beiden Exzenter beispielsweise axial miteinander angeordnet sind. Dabei können die Exzenter als gekröpfte Bereiche der Doppelexzenterwelle ausgebildet sein, welche in Umfangsrichtung der Doppelexzenterwelle in einem vorbestimmten Winkel zueinander angeordnet sind. Beispielsweise können die Exzenter in einem Winkel von etwa 180° über den Umfang verteilt angeordnet sein. Die Exzenterwelle ist z.B. über eine Zahnsegmentscheibe betätigbar.

Eine andere Ausführungsvariante der erfindungsgemäßen Betätigungsanordnung mit z.B. zwei Übertragungsmittel kann vorsehen, dass als Übertragungsmittel jedem als z.B. Getriebebremse ausgebildeten Synchronisationsmittel ein Hebelelement oder dergleichen zugeordnet ist, wobei die beiden Hebelelemente über ein gemeinsames Betätigungselement, z.B. eine von dem Aktuator angetriebene Zahnsegmentscheibe oder dergleichen betätigbar sind. Die Ankoppelung der Übertragungsmittel an das gemeinsame Betätigungselement kann beispielsweise über Stößel erfolgen. Bei dieser Ausführungsvariante treibt der Aktuator die als Übertragungsmittel ausgebildeten Hebelelemente an, die dann jeweils separat auf das jeweilige Synchronisationsmittel wirken.

Bei der vorgenannten Ausführungsvariante kann beispielsweise eine verzahnte Ausgangswelle eines z.B. als Elektromotor ausgebildeten Aktuators mit einer Verzahnung der Zahnsegmentscheibe in Eingriff stehen, wobei die Drehachse der Zahnsegmentscheibe mit Aufnahmeabschnitten oder dergleichen ausgerüstet ist, welche jeweils über einen Anlenkhebel bzw. Stößel mit den zugeordneten Hebelelementen in Wirkverbindung stehen. Somit kann je nach Drehrichtung des Aktuators die eine oder andere Getriebebremse betätigt werden. Beispielsweise kann die Drehachse des jeweiligen Hebelelements an dem der Zahnsegmentscheibe abgewandten Ende gehäusefest gelagert sein, an dem auch das gehäusefeste Ende der als Bandbremse ausgebildeten Getriebebremse gehalten ist, wobei das bewegliche Ende der Bandbremse z.B. an dem jeweiligen Hebelelement zwischen den beiden Enden befestigt sein kann. Es sind jedoch auch andere Ausführungen denkbar.

Unabhängig von der jeweiligen Ausführung der Synchronisationsmittel und auch des Aktuators bei der erfindungsgemäßen Betätigungsanordnung kann vorzugsweise vorgesehen sein, dass die Synchronisationsmittel jeweils einem Gangzahnrad mit der höchsten Übersetzung des jeweiligen Teilgetriebes zugeordnet ist. Es sind jedoch auch andere Anordnungsmöglichkeiten denkbar. Der Aktuator kann beispielsweise im Wesentlichen achsparallel oder auch senkrecht zu den Vorgelegewellen des Doppelkupplungsgetriebes angeordnet sein. Auch hier sind andere Anordnungsmöglichkeiten denkbar.

Um einen besonderen Bauraumvorteil bei dem Doppelkupplungsgetriebe zu erreichen, kann vorgesehen sein, dass jedes Synchronisationsmittel z.B. konzentrisch zu der jeweiligen Schaltung an einer der Vorgelegewellen angeordnet ist. Somit können die Synchronisationsmittel im gleichen axialen Bauraum untergebracht werden, so dass eine radiale ineinander geschachtelte Bauweise möglich ist.

Der zur Betätigung der beiden Synchronisationsmittel vorgesehene Aktuator kann zum Beispiel ein Elektromotor, in Form eines Rotations- oder Linearmotores oder dergleichen, sein. Es ist auch möglich, dass als Aktuator ein Elektromagnet oder eine Zylinder-Kolben-Einheit verwendet wird.

Als Synchronisationsmittel können beispielsweise jedem Teilgetriebe zumindest eine Getriebebremse und/oder eine Kupplung zugeordnet sein. Als Getriebebremsen können zum Beispiel Bandbremsen, Lamellenbremse und/oder Konusbremse vorgesehen sein. Beispielsweise kann bei der Verwendung einer Getriebebremse die erforderliche Bremstrommel, Bremsscheibe oder der Bremskonus einteilig mit dem zugeordneten Fest- oder Losrad ausgeführt sein. Es sind auch andere konstruktive Ausgestaltungen der Getriebebremse denkbar.

Als Kupplung kann z.B. eine Konuskupplung, eine Lamellenkupplung oder dergleichen vorgesehen sein. Die Schaltelemente beziehungsweise Schalteinrichtungen zur Gangwahl können vorzugsweise aus der Welle heraus mit einer so genannten Innenbetätigung betätigt werden. Die Schaltelemente selbst können zum Beispiel Klauen oder dergleichen sein. Es sind auch andere Schaltelemente verwendbar.

Nachfolgend wird die Erfindung anhand der Zeichnungen näher erläutert. Es zeigen:
Fig. 1 eine perspektivische Teilansicht einer ersten Ausführungsvariante einer Betätigungsanordnung mit einem Aktuator zur Betätigung der Synchronisationsmittel beider Teilgetriebe;
Fig. 2 eine perspektivische Teilansicht der ersten Ausführungsvariante mit einer alternativen Anordnung des Aktuators;
Fig. 3 eine perspektivische Teileinsicht einer zweiten Ausführungsvariante der Betätigungsanordnung mit dem Aktuator mit nur einem Übertragungsmittel zur Betätigung der Synchronisationsmittel beider Teilgetriebe;
Fig. 4 eine weitere perspektivische Teilansicht der zweiten Ausführungsvariante;
Fig. 5 eine perspektivische Einzelteilansicht des als Bandbremsen ausgebildeten Synchronisationsmittel gemäß Figur 3 und 4; und
Fig. 6 eine schematische Prinzipdarstellung eines Doppelkupplungsgetriebes mit möglichen Anbauorten der Synchronisationsmittel an den beiden Teilgetriebe.

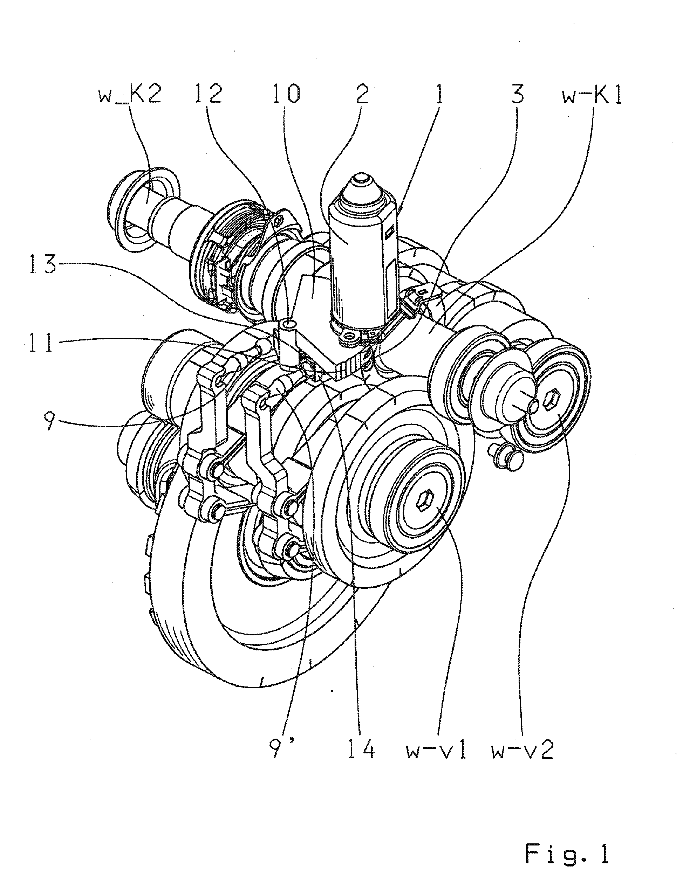

Die Figuren 1 bis 6 zeigen verschiedene Ausführungsvarianten einer erfindungsgemäßen Betätigungsanordnung zur Betätigung von Synchronisationsmitteln bei einem zentralsynchronisierten Doppelkupplungsgetriebe mit einem ersten Teilgetriebe 6 und einem zweiten Teilgetriebe 7, wobei jedem Teilgetriebe 6, 7 ein Synchronisationsmittel zugeordnet ist. Unabhängig von der konkreten Ausgestaltung des Doppelkupplungsgetriebes ist bei der erfindungsgemäßen Betätigungsanordnung vorgesehen, dass die beiden Synchronisationsmittel der Teilgetriebe 6, 7 mittels eines gemeinsamen Aktuator 1 betätigt werden können. Somit ist der Aktuator 1 als Kombiaktuator vorgesehen, der wahlweise die Getriebesynchronisationsmittel der parallel geschalteten Teilgetriebe 6, 7 betätigen kann.

Unabhängig von der jeweiligen Ausführungsvariante umfasst die Betätigungsanordnung als Aktuator 1 einen Elektromotor 2, der eine Ausgangswelle 3 antreibt. Als Synchronisationsmittel sind Getriebebremsen in Form von Bandbremsen 4, 5 vorgesehen, wobei die Bandbremse 4 dem ersten Teilgetriebe 6 und die Bandbremse 5 dem zweiten Teilgetriebe 7 zugeordnet sind. Die Betätigungsanordnung ist derart ausgestaltet, dass in Abhängigkeit der jeweiligen Bewegungsrichtung des Aktuators 1 aus seiner Nulllage heraus die Bandbremse 4 des ersten Teilgetriebes 6 oder die Bandbremse 5 des zweiten Teilgetriebes 7 angesteuert wird.

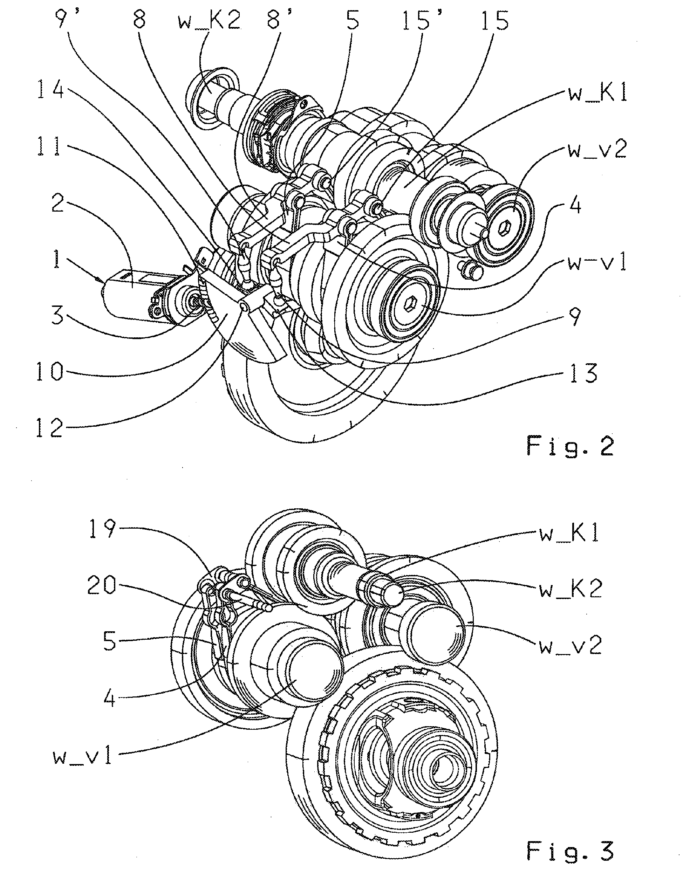

In den Figuren 1 und 2 ist eine erste mögliche Ausführungsvariante der erfindungsgemäßen Betätigungsanordnung an dem zentralsynchronisierten Doppelkupplungsgetriebe dargestellt. Bei der ersten Ausführungsvariante sind zur Übertragung der Drehbewegung des Elektromotors 2 beziehungsweise der Ausgangswelle 3 auf die jeweiligen Bandbremsen 4, 5 zwei mechanische Übertragungsmittel zwischen dem Elektromotor 2 und den Bandbremsen 4, 5 vorgesehen. Jedes Übertragungsmittel umfasst ein Hebelelement 8, 8', welches jeweils über einen Stößel 9, 9' mit einer von der Ausgangswelle 3 des Elektromotors 2 angetriebenen Zahnsegmentscheibe 10 in Wirkverbindung steht. Die eine Verzahnung aufweisende Ausgangswelle 3 des Elektromotors 2 steht mit einer Verzahnung 11 der Zahnsegmentscheibe 10 in Eingriff, wobei die Drehachse 12 der Zahnsegmentscheibe 10 mit Aufnahmeabschnitten 13,14 ausgerüstet ist, die jeweils über die Stößel 9, 9' mit dem zugewandten Ende des jeweiligen Hebelelement 8, 8' in Wirkverbindung stehen. Das dem Stößel 9, 9' abgewandte Ende des jeweiligen Hebelelementes 8, 8' ist als Drehachse 15, 15' gehäusefest gelagert. Das die Drehachse 15, 15' bildende Ende des jeweiligen Hebelelements 8, 8' dient gleichzeitig zur Aufnahme des gehäusefesten Endes der jeweiligen Bandbremse 4, 5. Das bewegbare beziehungsweise betätigbare Ende zum Betätigen der Bandbremse 4, 5 ist jeweils am jeweiligen Hebelelement 8, 8' zwischen den beiden Enden aufgenommen. Somit kann die zugeordnete Bandbremse 4, 5 durch das Schwenken des jeweiligen Hebelelementes 8, 8' aktiviert bzw. gespannt oder gelöst bzw. entspannt werden.

Bei der ersten Ausführungsvariante gemäß Figur 1 ist der Elektromotor 2 etwa senkrecht zu den beiden Vorgelegewellen w_v1, w_v2 und den Getriebeeingangswellen w_k1, w_k2 der beiden Teilgetriebe 6, 7 des beispielhaft angedeuteten Doppelkupplungsgetriebes angeordnet. Die Verzahnung 11 der Zahnsegmentscheibe 10 ist radial außen am Umfangsbereich der Zahnsegmentscheibe 10 vorgesehen.

Bei einer alternativen Anordnung des Elektromotors 2 gemäß Figur 2 ist der Elektromotor 2 etwa parallel oder einem vorbestimmten, insbesondere spitzen Winkel zu den beiden Vorgelegewellen w_v1, w_v2 und den Getriebeeingangswellen w_k1, w_k2 der beiden Teilgetriebe 6, 7 des Doppelkupplungsgetriebes angeordnet. Bei dieser Ausführung ist die Verzahnung 11 der Zahnsegmentscheibe 10 auf der Oberfläche vorgesehen.

Unabhängig von der jeweiligen Anordnung des Aktuators 1 können bei der ersten Ausführungsvariante die Aufnahmeabschnitte 13,14 etwa in einem Winkel von 180° am Umfang der Drehachse der Zahnsegmentscheibe 10 zueinander angeordnet sein. Es sind auch andere Winkel denkbar.

Unabhängig von der jeweiligen Ausführung der ersten Ausführungsvariante gemäß Figur 1 und 2 wird durch die Wahl der Drehrichtung der Ausgangswelle 3 des Elektromotors 2 die Zahnsegmentscheibe 10 nach links oder nach rechts gedreht. Durch diese Drehung der Zahnsegmentscheibe 10 wird einer der Stößel 9, 9' betätigt, um das zugeordnete Hebelelement 8, 8' um seine Schwenkachse 15, 15' zu schwenken, so dass das zugeordnete bewegbare Ende der Bandbremse 4, 5 mit bewegt wird, wodurch die zugeordnete Bandbremse 4, 5 gespannt beziehungsweise aktiviert wird. Somit kann je nach Drehrichtung der Ausgangswelle 3 des Elektromotors 2 die eine oder andere Bandbremse 4, 5 betätigt werden.

In den Figuren 3 bis 5 sind Ansichten einer zweiten möglichen Ausführungsvariante dargestellt, wobei gleiche Bauteile mit dem gleichen Bezugszeichen wie bei der ersten Ausführungsvariante bezeichnet werden. Bei der zweiten Ausführungsvariante ist zur Übertragung der Bewegungsrichtung des Elektromotors 2 auf die Bandbremsen 4, 5 nur ein Übertragungsmittel vorgesehen. Als Übertragungsmittel ist eine Doppelexzenterwelle 20 vorgesehen, deren Exzenter 16,17 jeweils mit dem bewegbaren Ende der jeweiligen Bandbremse 4, 5 verbunden sind. Die gehäusefesten Enden der Bandbremsen 4, 5 sind an einem Lagerbolzen 18 befestigt, der mit seinen Enden in Aufnahmebuchsen einer Trägereinheit 19 gehalten ist. Die Doppelexzenterwelle 20 ist in der Trägereinheit 19 drehbar gelagert.

Die beiden Exzenter 16,17 der Doppelexzenterwelle 20 sind in axialer Richtung hintereinander angeordnet und in Umfangsrichtung in einem Winkel von etwa 180° zueinander versetzt. Es sind auch andere Winkel möglich. Das den Bandbremsen 4, 5 abgewandte Ende der Doppelexzenterwelle 20 steht in einer nicht weiter gezeigten Weise mit der Ausgangswelle 3 des Elektromotors 2 in Wirkverbindung.

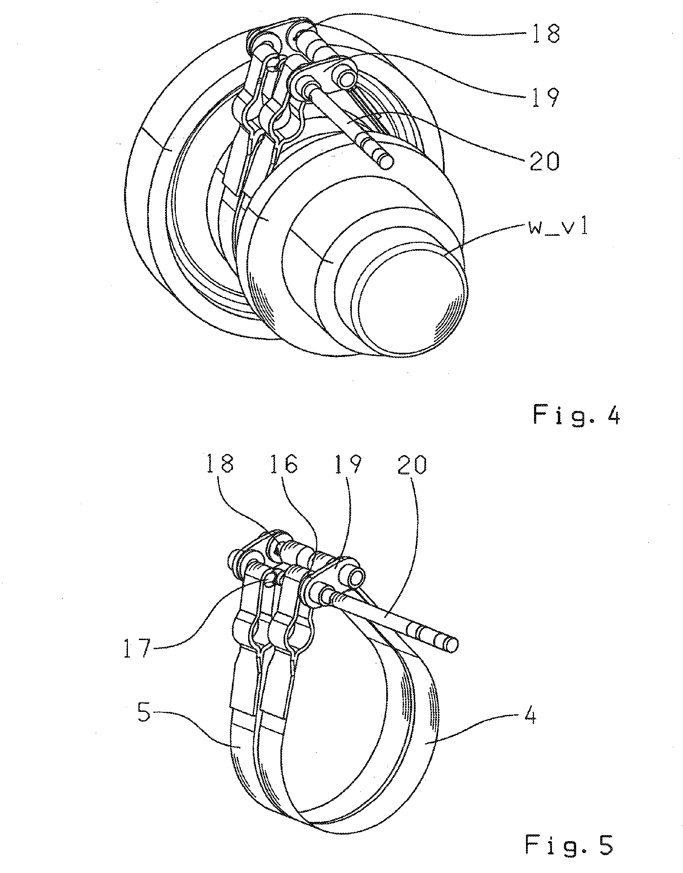

Insbesondere aus Figur 5 ist ersichtlich, dass, wenn die Ausgangswelle 3 des Elektromotors 2 beziehungsweise die Doppelexzenterwelle 20 nach rechts gedreht wird, die Bandbremse 4 durch die entsprechende Bewegung des Exzenter 16 entspannt und die Bandbremse 5 durch die entsprechende Bewegung des Exzenter 17 gespannt wird. Wenn die Ausgangswelle 3 des Elektromotors 2 beziehungsweise die Doppelexzenterwelle 20 nach links gedreht wird, ergibt sich genau die umgekehrte Betätigung der Bandbremsen 4, 5.

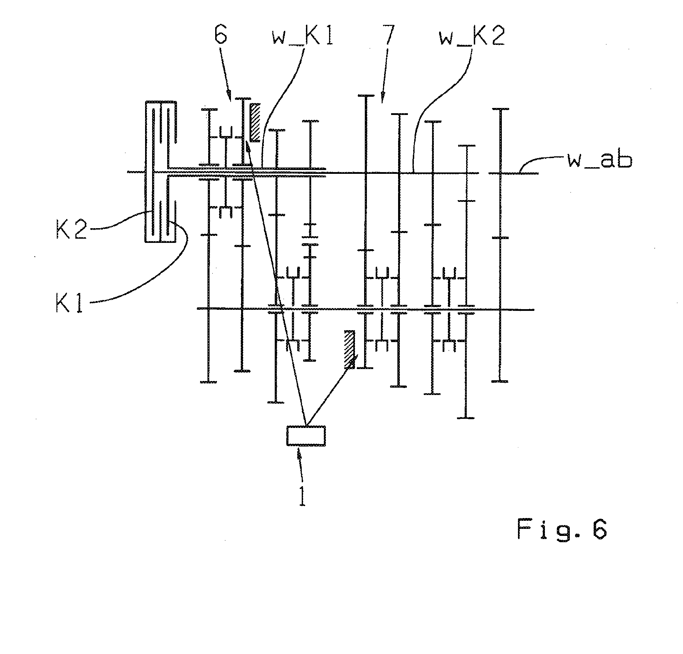

In Figur 6 ist eine schematische Prinzipdarstellung eines möglichen Doppelkupplungsgetriebes mit der Andeutung des Anbauortes der Synchronisationsmittel an den beiden Teilgetrieben 6, 7 gezeigt. Aus dieser Darstellung ergibt sich, dass die Synchronisationsmittel jeweils dem höchsten Gangzahnrad des jeweiligen Teilgetriebes 6, 7 zugeordnet sind. Die Synchronisationsmittel werden in vorgeschriebener Weise durch den schematisch angedeuteten Aktuator 1 betätigt. Die von dem Aktuator 1 ausgehenden Pfeile zeigen auf den jeweiligen Anbauort der Synchronisationsmittel und sollen schematisch die Übertragungsmittel darstellen. Neben den verschiedenen Übersetzungsstufen des Getriebes sind die dem ersten Teilgetriebe 6 zugeordnete Getriebeeingangswelle w_k1, welche der Kupplung K1 zugeordnet ist, und die dem zweiten Teilgetriebe 7 zugeordnete Getriebeeingangswelle w_k2, welche der Kupplung K2 zugeordnet ist, sowie die Abtriebswelle w_ab dargestellt.

Unabhängig davon, ob die Bandbremsen 4, 5 über die Hebelelemente 8, 8' oder über die Doppelexzenterwelle 20 betätigt werden, ist bei einer Betätigung an der auflaufenden Seite des Bremsbandes eine Selbstverstärkung und somit eine geringere Bremskraft erforderlich, wobei die Bandbremsen 4, 5 Reibwert empfindlicher sind. Wenn die Betätigung an der ablaufenden Seite des Bremsbandes erfolgt, tritt keine Selbstverstärkung auf, so dass höhere Bremskräfte erforderlich sind, wobei die Bandbremsen 4, 5 dann Reibwert unempfindlicher sind. Dadurch kann eventuell eine bessere Dosierung der Bremskraft erfolgen. Unabhängig von der jeweiligen Ausführungsvariante ist auf das Bremsband jeder Bandbremse 4, 5 ein geeigneter Reibbelag aufgebracht. Unabhängig von der Betätigungsart und -weise kann zwischen der Betätigungseinrichtung und der Bandbremse 4, 5 ein Rückstellelement zum Sicherstellen eines Lüftspiels am Bremsband vorgesehen sein. Als Rückstellelement kann z.B. eine Rückstellfeder oder dergleichen eingesetzt werden. Es sind auch andere Einstellelemente verwendbar.

### Bezugszeichen

- 1: Aktuator
- 2: Elektromotor
- 3: Ausgangswelle
- 4: Bandbremse
- 5: Bandbremse
- 6: erstes Teilgetriebe
- 7: zweites Teilgetriebe
- 8, 8': Hebelelement
- 9, 9': Stößel
- 10: Zahnsegmentscheibe
- 11: Verzahnung
- 12: Drehachse der Zahnsegmentscheibe
- 13: Aufnahmeabschnitt
- 14: Aufnahmeabschnitt
- 15, 15': Drehachse des Hebelelements
- 16: Exzenter
- 17: Exzenter
- 18: Lagerbolzen
- 19: Trägereinheit
- 20: Doppelexzenterwelle
- w_K1: erste Getriebeeingangswelle
- w_K2: zweite Getriebeeingangswelle
- w_v1: erste Vorgelegewelle
- w_v1: zweite Vorgelegewelle
- K1: Kupplung
- K2: Kupplung
- w_ab: Abtriebswelle

## Patentansprüche

1. Betätigungsanordnung zur Betätigung von Synchronisationsmitteln eines zentralsynchronisierten Doppelkupplungsgetriebes mit zumindest einem ersten Teilgetriebe (6) und einem zweiten Teilgetriebe (7), wobei jedem Teilgetriebe (6, 7) zumindest ein Synchronisationsmittel zugeordnet ist, dadurch **gek ennzeichnet,** dass zumindest die Synchronisationsmittel der beiden Teilgetriebe über einen gemeinsamen Aktuator (1) betätigbar sind.

2. Betätigungsanordnung nach Anspruch 1, dadurch **gekennzeich net**, dass in Abhängigkeit der jeweiligen Bewegungsrichtung des Aktuators (1) aus seiner Nulllage heraus das Synchronisationsmittel des ersten Teilgetriebes (6) oder das Synchronisationsmittel des zweiten Teilgetriebes (7) ansteuerbar ist.

3. Betätigungsanordnung nach Anspruch 2, dadurch **gekennzeich net**, dass zur Übertragung der Bewegung des Aktuators (1) auf die Synchronisationsmittel zumindest ein Übertragungsmittel zwischen dem Aktuator (1) und den jeweiligen Synchronisationsmittel vorgesehen ist.

4. Betätigungsanordnung nach Anspruch 3, dadurch **gekennzeich net**, dass als Übertragungsmittel eine Doppelexzenterwelle (20) vorgesehen ist, deren Exzenter (16, 17) jeweils mit einem bewegbaren Ende des als Bandbremse (4, 5) ausgebildeten Synchronisationsmittel verbunden sind.

5. Betätigungsanordnung nach einem der vorangehenden Ansprüche, **dadurch gekennzeichnet, dass** als Übertragungsmittel jedem Synchronisationsmittel ein Hebelelement (8, 8') zugeordnet ist, wobei die beiden Hebelelemente (8, 8') jeweils über einen Stößel (9, 9') mit einer von dem Aktuator (1) angetriebenen Zahnsegmentscheibe (10) betätigbar sind.

6. Betätigungsanordnung nach Anspruch 5, dadurch **gekennzeich net**, dass eine verzahnte Ausgangswelle (3) eines als Elektromotor (2) ausgebildeten Aktuators (1) mit einer Verzahnung (11) der Zahnsegmentscheibe (10) in Eingriff steht, wobei die Drehachse (12) der Zahnsegmentscheibe (10) mit Aufnahmeabschnitten (13, 14) ausgerüstet ist, welche jeweils über den Stößel (9, 9') mit dem zugeordneten Hebelelementen (8, 8') in Wirkverbindung stehen.

7. Betätigungsanordnung nach Anspruch 6, dadurch **gekennzeich net**, dass die Drehachse (15, 15') des jeweiligen Hebelelements (8, 8') an dem der Zahnsegmentscheibe (10) abgewandten Ende gehäusefest gelagert ist.

8. Betätigungsanordnung nach Anspruch 7, dadurch **gekennzeich** n e t, dass an dem abgewandelten Ende jedes Hebelelements (8, 8') das gehäusefeste Ende des als Bandbremse (4, 5) ausgebildeten Synchronisationsmittels gehalten ist, wobei das bewegliche Ende der Bandbremse (4, 5) an dem jeweiligen Hebelelement (8, 8') zwischen den beiden Enden befestigt ist.

9. Betätigungsanordnung nach einem der vorangehenden Ansprüche, **dadurch gekennzeichnet, dass** die Synchronisationsmittel jeweils einem Gangzahnrad mit der höchsten Übersetzung jedes Teilgetriebes (6, 7) zugeordnet ist.

10. Betätigungsanordnung nach einem der Ansprüche 6 bis 9, dadurch **g ekennzeichnet,** dass der Aktuator (1) im Wesentlichen achsparallel oder senkrecht zu den Vorgelegewellen (w_v1, w_v2) und den Getriebeeingangswellen (w_k1, w_k2) der Teilgetriebe (6, 7) angeordnet ist.

11. Betätigungsanordnung nach einem der vorangehenden Ansprüche, **dadurch gekennzeichnet, dass** jedes Synchronisationsmittel konzentrisch zur jeweiligen Innenschaltungen an einer der Vorgelegewellen (w_v1, w_v2) angeordnet ist.

12. Betätigungsanordnung nach einem der vorangehenden Ansprüche, **dadurch gekennzeichnet, dass** als Aktuator (1) ein Elektromotor (2), ein Elektromagnet und/oder eine Zylinder-Kolben-Einheit vorgesehen ist.

13. Betätigungsanordnung nach Anspruch 12, dadurch **gekennzeic hnet**, dass der Elektromotor (2) als Rotations- oder Linearmotor ausgeführt ist.

14. Betätigungsanordnung nach einem der vorangehenden Ansprüche, **dadurch gekennzeichnet, dass** als Synchronisationsmittel jedem Teilgetriebe (6, 7) jeweils eine Getriebebremse und/oder eine Kupplung zugeordnet ist.

15. Betätigungsanordnung nach Anspruch 14, dadurch **gekennzeic hnet**, dass als Getriebebremse eine Bandbremse (4, 5), Lamellenbremse und/oder Konusbremse vorgesehen ist.

16. Betätigungsanordnung nach Anspruch 14 oder 15, dadurch **geken nzeichnet**, dass als Kupplung eine Konuskupplung und/oder Lamellenkupplung vorgesehen ist.

## Claims

1. Actuating assembly for actuating synchronization means of a centrally synchronized dual-clutch transmission having at least a first partial transmission (6) and a second partial transmission (7), wherein each partial transmission (6, 7) is assigned at least one synchronization means, **characterized in that** at least the synchronization means of the two partial transmissions can be actuated by means of a common actuator (1).

2. Actuating assembly according to Claim 1, **characterized in that** the synchronization means of the first partial transmission (6) or the synchronization means of the second partial transmission (7) can be activated as a function of the respective direction of movement of the actuator (1) out of its zero position.

3. Actuating assembly according to Claim 2, **characterized in that** in order to transmit the movement of the actuator (1) to the synchronization means at least one transmission means is provided between the actuator (1) and the respective synchronization means.

4. Actuating assembly according to Claim 3, **characterized in that** a double eccentric shaft (20), whose eccentrics (16, 17) are each connected to a movable end of the synchronization means which is embodied as a band brake (4, 5), is provided as the transmission means.

5. Actuating assembly according to one of the preceding claims, **characterized in that** each synchronization means is assigned a lever element (8, 8') as a transmission means, and the two lever elements (8, 8') can each be actuated by means of a tappet (9, 9') with a toothed segment disc (10) which is driven by the actuator (1).

6. Actuating assembly according to Claim 5, **characterized in that** a toothed output shaft (3) of an actuator (1) which is embodied as an electric motor (2) is in engagement with a toothing arrangement (11) of the toothed segment disc (10), wherein the rotational axis (12) of the toothed segment disc (10) is equipped with receptacle sections (13, 14) which are each operatively connected to the assigned lever elements (8, 8') via the tappet (9, 9').

7. Actuating assembly according to Claim 6, **characterized in that** the rotational axis (15, 15') of the respective lever element (8, 8') is mounted fixed to the housing, at the end facing away from the toothed segment disc (10).

8. Actuating assembly according to Claim 7, **characterized in that** the end, fixed to the housing, of the synchronization means which is embodied as a band brake (4, 5) is secured to the end, facing away, of each lever element (8, 8'), wherein the movable end of the band brake (4, 5) is attached to the respective lever element (8, 8') between the two ends.

9. Actuating assembly according to one of the preceding claims, **characterized in that** the synchronization means are each assigned to a gear wheel with the highest transmission ratio of each partial transmission (6, 7).

10. Actuating assembly according to one of Claims 6 to 9, **characterized in that** the actuator (1) is arranged essentially axis-parallel or perpendicularly with respect to the lay shafts (w_v1, w_v2) and the transmission input shafts (w_k1, w_k2) of the partial transmissions (6, 7).

11. Actuating assembly according to one of the preceding claims, **characterized in that** each synchronization means is arranged concentrically in relation to the respective internal circuits at one of the lay shafts (w_v1, w_v2).

12. Actuating assembly according to one of the preceding claims, **characterized in that** an electric motor (2), an electromagnet and/or a cylinder-piston unit are provided as the actuator (1).

13. Actuating assembly according to Claim 12, **characterized in that** the electric motor (2) is embodied as a rotation motor or linear motor.

14. Actuating assembly according to one of the preceding claims, **characterized in that** each partial transmission (6, 7) is respectively assigned a transmission brake and/or a clutch as a synchronization means.

15. Actuating assembly according to Claim 14, **characterized in that** a band brake (4, 5), a multi-disc brake and/or conical brake are/is provided as the transmission brake.

16. Actuating assembly according to Claim 14 or 15, **characterized in that** a conical clutch and/or multi-disc clutch are/is provided as the clutch.

## Revendications

1. Système d'actionnement pour l'actionnement de moyens de synchronisation d'une boîte de vitesses à double embrayage et à synchronisation centrale avec au moins une première boîte de vitesses partielle (6) et une deuxième boîte de vitesses partielle (7), dans lequel au moins un moyen de synchronisation est associé à chaque boîte de vitesses partielle (6, 7), **caractérisé en ce qu'**au moins les moyens de synchronisation des deux boîtes de vitesses partielles peuvent être actionnés par un actionneur commun (1).

2. Système d'actionnement selon la revendication 1, **caractérisé en ce que** le moyen de synchronisation de la première boîte de vitesses partielle (6) ou le moyen de synchronisation de la deuxième boîte de vitesses partielle (7) peut être commandé en fonction de la direction de mouvement respective de l'actionneur (1) à partir de sa position zéro.

3. Système d'actionnement selon la revendication 2, **caractérisé en ce qu'**il est prévu au moins un moyen de transmission entre l'actionneur (1) et le moyen de synchronisation respectif pour la transmission du mouvement de l'actionneur (1) aux moyens de synchronisation.

4. Système d'actionnement selon la revendication 3, **caractérisé en ce qu'**il est prévu comme moyen de transmission un arbre excentrique double (20), dont les excentriques (16, 17) sont respectivement assemblés à une extrémité mobile du moyen de synchronisation réalisé sous forme de frein à bande (4, 5).

5. Système d'actionnement selon l'une quelconque des revendications précédentes, **caractérisé en ce qu'**un élément de levier (8, 8') est associé à chaque moyen de synchronisation comme moyen de transmission, dans lequel les deux éléments de levier (8, 8') peuvent être actionnés respectivement par un poussoir (9, 9') avec un segment de disque denté (10) entraîné par l'actionneur (1).

6. Système d'actionnement selon la revendication 5, **caractérisé en ce qu'**un arbre de sortie denté (3) d'un actionneur (1) réalisé sous la forme d'un moteur électrique (2) engrène avec une denture (11) du segment de disque denté (10), dans lequel l'axe de rotation (12) du segment de disque denté (10) est muni de parties de réception (13, 14), qui sont en liaison active avec les éléments de levier associés (8, 8') respectivement par les poussoirs (9, 9').

7. Système d'actionnement selon la revendication 6, **caractérisé en ce que** l'axe de rotation (15, 15') de l'élément de levier respectif (8, 8') est monté solidairement au boîtier à l'extrémité située à l'opposé du segment de disque denté (10).

8. Système d'actionnement selon la revendication 7, **caractérisé en ce que** l'extrémité solidaire du boîtier du moyen de synchronisation réalisé sous forme de frein à bande (4, 5) est maintenue à l'extrémité opposée de chaque élément de levier (8, 8'), dans lequel l'extrémité mobile du frein à bande (4, 5) est fixée à l'élément de levier respectif (8, 8') entre les deux extrémités.

9. Système d'actionnement selon l'une quelconque des revendications précédentes, **caractérisé en ce que** les moyens de synchronisation sont respectivement associés à une roue dentée de rapport de vitesse avec la plus grande démultiplication de chaque boîte de vitesses partielle (6, 7).

10. Système d'actionnement selon l'une quelconque des revendications 6 à 9, **caractérisé en ce que** l'actionneur (1) est disposé essentiellement parallèlement à l'axe ou perpendiculairement aux arbres intermédiaires (w_v1, w_v2) et aux arbres d'entrée de boîte de vitesses (w_k1, w_k2) des boîtes de vitesses partielles (6, 7).

11. Système d'actionnement selon l'une quelconque des revendications précédentes, **caractérisé en ce que** chaque moyen de synchronisation est disposé de façon concentrique aux positions intérieures respectives sur un des arbres intermédiaires (w_v1, w_v2).

12. Système d'actionnement selon l'une quelconque des revendications précédentes, **caractérisé en ce qu'**il est prévu comme actionneur (1) un moteur électrique (2), un électroaimant et/ou une unité à piston-cylindre.

13. Système d'actionnement selon la revendication 12, **caractérisé en ce que** le moteur électrique (2) est un moteur rotatif ou un moteur linéaire.

14. Système d'actionnement selon l'une quelconque des revendications précédentes, **caractérisé en ce qu'**un frein d'engrenage et/ou un embrayage est respectivement associé à chaque boîte de vitesses partielle (6, 7) en tant que moyen de synchronisation.

15. Système d'actionnement selon la revendication 14, **caractérisé en ce qu'**il est prévu un frein à bande (4, 5), un frein à lamelles et/ou un frein à cône comme frein d'engrenage.

16. Système d'actionnement selon la revendication 14 ou 15, **caractérisé en ce qu'**il est prévu un embrayage à cône et/ou un embrayage à lamelles comme embrayage.
